# EUROPEAN PATENT APPLICATION

(11) **EP 3 354 512 A1**
(43) Date of publication of application: **01.08.2018**
(21) Application number: 15904818.0
(22) Date of filing: 27.11.2015
(51) Int. Cl.: B60L 13/04, B61B 13/08, H02N 15/00

(54) **ADJUSTABLE MAGNETIC SUSPENSION FOR A VEHICLE WITH ADJUSTMENT OF THE LIFTING FORCE**

(30) Priority: 24.09.2015 RU 2015140826
(71) Applicant: Joint Stock Company "d.v. Efremov Institute of Electrophysical Apparatus", St.Petersburg 196641 (RU); Joint Stock Company "Science And Innovations" (Science and Innovation JSC"), Moscow 119017 (RU)
(72) Inventor: AMOSKOV, Viktor Mihaylovich, St.Petersburg 197374 (RU); ARSLANOVA, Dar'ya Nikolaevna, St.Petersburg 192174 (RU); BELOV, Aleksandr Vyacheslavovich, St.Petersburg 196641 (RU); BELYAKOV, Valeriy Arkad'evich, St.Petersburg 196641 (RU); VASIL'EV, Vyacheslav Nikolaevich, St.Petersburg 191025 (RU); KAPARKOVA, Marina Viktorovna, St.Petersburg 196641 (RU); KOROTKOV, Vladimir Aleksandrovich, Kolpino St.Petersburg 196655 (RU); KUKHTIN, Vladimir Petrovich, Kolpino St.Petersburg 189630 (RU); LAMZIN, Evgeniy Anatol'evich, St.Petersburg 195279 (RU); LARIONOV, Mihail Sergeevich, St.Petersburg 196641 (RU); MIKHAYLOV, Valeriy Mikhaylovich, p. Metallostroy St.Petersburg 196641 (RU); NEZHENTSEV, Andrey Nikolaevich, St.Petersburg 196641 (RU); RODIN, Igor' Yur'evich, Kolpino St. Petersburg 196653 (RU); SYCHEVSKIY, Sergey Evgen'evich, St.Petersburg 197101 (RU); FILATOV, Oleg Gennadievich, St. Petersburg 196641 (RU); FIRSOV, Aleksey Anatol'evich, St. Petersburg 196641 (RU); SHATIL', Nikolay Aleksandrovich, St. Petersburg 192174 (RU); GLUKHIKH, Vasiliy Andreevich, St. Petersburg 196641 (RU); ZAYTSEV, Anatoliy Aleksandrovich, St. Petersburg 197046 (RU)
(74) Representative: Friese Goeden Patentanwälte PartGmbB
(86) International application number: PCT/RU2015/000827
(87) International publication number: WO 2017/052411

(57) **Abstract**

A magnetic suspension of a vehicle for an underpass with a ferromagnetic rail of an arbitrary cross section is proposed, which comprises permanent magnets and electromagnets mounted to be able to be attracted to a ferromagnetic rail. Permanent magnets are installed being arranged to control the force of attraction to the ferromagnetic rail. The position and / or mass of the permanent magnets can be adjusted before starting the movement under the weight of the vehicle and the transported load.

## Description

### Field of invention

The invention relates to a device for magnetic suspension of levitating vehicles.

### Background of the invention

For the transportation of people or goods with the use of magnetic levitation, relatively many methods of movement are suggested in which a vehicle without mechanical contact with an underpass (track structure) is held above it by means of ponderomotive forces generated by electromagnets or permanent magnets (magnetic cushion). The traction motor can accelerate the vehicle on a magnetic suspension to speeds significantly exceeding the speed of the normal transport.

Wherein there is a special ferromagnetic rail guide provided in the underpass of (ferro rail) with a transverse profile of various shapes. On the vehicle there are electromagnets attracted to the ferro rail. Controlling the magnitude of the electromagnet current on the vehicle allows reaching fixation of the position of the electromagnet relative to the ferro rail. The traction motor of the vehicle accelerates it to a predetermined speed, overcoming only the air resistance and the force of electrodynamic braking, which in this case has a small value.

It is important to maintain a constant gap between the vehicle and the underpass to ensure optimum operation of the traction motor. Fluctuation of the gap at rest and during movement (depending on the load of the car and the properties of the underpass) is compensated by a change in the magnitude of the current in the electromagnets of the vehicle.

Scheme with permanent magnets instead of electromagnets is more efficient in terms of power consumption. But the scheme based only on permanent magnets, is absolutely unstable. This problem is eliminated by combining, in one combined suspension, both permanent magnets performing the basic load-carrying function and electromagnets correcting the fluctuations in the gap between the moving vehicle and the underpass, as well as changing the weight of the load.

As a rule, the weight of the cargo is not constant in time. For example, a passenger car can carry a different number of passengers, and a freight car can be loaded with loads of different weights or be empty. Changes in the weight of the cargo are possible during the movement (drying, precipitation, etc.) If the combined suspension is rigidly fixed on the vehicle, a stable levitating state is provided only by controlling the electromagnets. Wherein two strategies are possible: in one case, the control is adjusted to maintain a constant gap size regardless of the weight of the load; in another case, the nominal gap is selected dynamically based on the condition of minimizing energy consumption for a given load weight. Each embodiment has its advantages and disadvantages. The advantage of the first embodiment is that both the electromagnets and the traction motor always work in the optimal selected conditions, ensuring the greatest efficiency of operation, the largest permissible range of parameters and the greatest readiness for strong or sharp external influences. The advantage of the second embodiment is the almost complete lack of energy consumption for weak or smooth external influences.

Patent RU 2037436 C1 proposed the idea of combined magnetic suspension with adjustable suspension lifting force when the load weight is changed by adjusting the distance between the underpass (ferro rail) and the vehicle, which is a second embodiment of the strategies described above. For this purpose, a permanent magnet and an electromagnet coiled around a permanent magnet are rigidly fixed to the vehicle. As a novelty, a special barrel is provided, movable in a vertical direction with respect to the vehicle and both magnets (the magnets themselves always remain stationary relative to the vehicle). On the barrel, there is a rigidly fixed gap sensor, which is part of the gap detection circuit between the sensor and the ferromagnetic rail. Another measuring circuit that determines the average current in the windings of the electromagnet is provided.

Note that the term "gap" in the prototype is the distance between the sensor and the underpass, whereas this term is usually applied to the ground clearance between the underpass and the vehicle above it, which, due to the rigidity of the structure, is equivalent to the distance between the underpass and the suspension of the vehicle. In the future, in order to avoid confusion, the term "sensor gap", in particular "sensor gap sensor" will be applied to the prototype.

Let the vehicle be in an equilibrium position at zero current in the windings. If the of the sensor gap sensor detects an instantaneous change in the sensor clearance (for example, when the weight of the load changes or when there is a fluctuation in motion), the current of the desired sign in the coil of the electromagnet is switched on to quickly correct the gap up or down. Further, with the provided significant delay (and even with possible manual control), the system of moving the glass with the sensor relative to the vehicle and magnets operates. The direction of movement of the barrel (up or down) is such that (current average over a certain period of time) the current in the electromagnets decreases. The barrel with the sensor stops when the measurement circuit of the average current fixes the zero value. As a result, a new equilibrium position is found.

Nevertheless, the proposed scheme for correcting the lifting force of magnets proposed in the prototype has a number of drawbacks.
1) The proposed magnetic circuit is not effective from the point of using a permanent magnet; The magnetic flux from it is closed by air. This leads to the fact that the field created by a permanent magnet in the gap and the lifting force due to this field may not be sufficient to provide levitation of loads of considerable weight.
2) The proposed magnetic circuit is not effective from the point of view of using an electromagnet; The magnetic flux from it is also closed by air. This leads to a weak ability of the electromagnet to correct the field of a permanent magnet, and as a consequence a narrow range of permissible external influences, under which the system is held in the levitation state.
3) The electromagnet is not effectively used also because of the change in the distance between it and the ferro rail. At large deletions, a large correction current is required.
4) The proposed scheme works well when it is necessary to reduce the gap (increase the attraction to the ferro rail), since the electromagnet is always attracted to the ferro rail. In the case where it is necessary to increase the gap (reduce the attraction), the physics of the process is more complicated, since the electromagnet is attracted to the ferro rail in any direction of the current. The effect of attenuation of attraction is caused here by mutual compensation of the magnetic field of the electromagnet and the permanent magnet. A permanent magnet can be replaced by a certain current along its surface. If we wind an infinitely thin electromagnet on the surface of a permanent magnet and launch an oppositely directed current, then the fields of the two magnets are partially compensated. Hence it is clear that if the possibilities of "attraction" to ferro rail are practically unlimited (depend only on the current of the electromagnet), then the possibilities of "repulsion" are limited by the weight of the vehicle, but actually less due to incomplete compensation of the fields. In this case, the prototype is very energy-intensive.
5) The need to locate the electromagnet winding on the surface of a permanent magnet is caused precisely by the indicated "repulsion" mode. In the case where it is structurally inconvenient to locate the winding on a permanent magnet this can cause problems. Note that if the electromagnet works only in the "attraction" mode, this restriction does not exist, although this arrangement of the winding is also advantageous for this mode.
6) The suspension lift correction circuit maintains a gap between the sensor and the ferro rail. This means that after working the sensor up (down), the vehicle as a whole moves along (together with the magnets fixed to it) down (up) from the ferro rail. That is, the distance between the underpass and the vehicle is not constant. As previously noted, in order to ensure the optimum operating mode of the traction motor, it is necessary to withstand this between the underpass and the vehicle, rather than the sensor. This scheme does not satisfy the prototype scheme at all.

### Summary

The object, to achieve which the proposed device is directed, is to eliminate the said shortcomings. The essence of the proposed system consists in the proposal to regulate the lifting force of the suspension by adjusting the position / orientation of the permanent magnet block relative to the suspension / vehicle / underpass. At the same time, the load-carrying function of electromagnets is excluded and only the correction function of the gap fluctuations remains to maintain an approximate constancy of the gap between the suspension (vehicle) and the underpass. Wherein the current consumed is significantly reduced, because the main part of the car's weight is held by permanent magnets.

The solution of the object of this invention is possible by means of a combined magnetic suspension of the vehicle over an underpass with at least one ferromagnetic rail. In accordance with the invention, permanent magnets performing a load-bearing role are positioned beneath the ferromagnetic rail, and electromagnets correcting the gap between the vehicle and the ferromagnetic rail (underpass) can be positioned above and below the ferromagnetic rail. Permanent magnets and electromagnets preferably have a connection between each other and the vehicle, allowing adjustment of their mutual position / orientation (connection of the permanent magnets to the vehicle / suspension is arranged to control the magnetic force of the permanent magnet with the ferro rail to maintain a constant gap between the magnetic suspension / vehicle and ferro rail, i.e. underpass). The cross-section of the ferromagnetic rail can be selectable (for example, rectangular).

Accordingly, in this invention, the magnetic suspension of a vehicle for an underpass with a ferromagnetic rail comprises permanent magnets and electromagnets arranged to be attracted to the ferromagnetic rail. Permanent magnets are installed being arranged to control the force of attraction to the ferromagnetic rail by changing the position of the permanent magnets relative to the suspension. The position of permanent magnets implies not only their location relative to the magnetic suspension, but also the orientation, i.e. permanent magnets can remain in the same position relative to the suspension, but their orientation, and hence position, relative to the suspension may vary. The position and / or mass of the permanent magnets can be adjusted before starting the movement under the weight of the vehicle.

In another basic embodiment of the magnetic suspension of a vehicle for an underpass with a ferromagnetic rail comprising permanent magnets and electromagnets arranged to be attracted to the ferromagnetic rail, the permanent magnets are arranged to control the attractive force to the ferromagnetic rail, and this capability is provided by the possibility of rotating the permanent magnets relative to the ferromagnetic rail and / or servo drives and / or hydraulic cylinders and / or gear drives and / or lever gears and / or several fixed positions of permanent magnets relative to the vehicle. Further particular embodiments of the vehicle may relate to both the first basic embodiment of the magnetic suspension and to another basic embodiment.

In one particular embodiment, the possibility to control the attraction of permanent magnets to the ferromagnetic rail can be provided by the possibility to move the permanent magnets up and / or down relative to the magnetic suspension, thereby changing the distance over which the permanent magnets are positioned relative to the ferromagnetic rail.

In another particular embodiment, the possibility of adjusting the attraction force of permanent magnets to the ferromagnetic rail can be provided by the possibility of rotating the permanent magnets with respect to the magnetic suspension, and hence with respect to the ferromagnetic rail, since the suspension with respect to the ferro rail does not rotate with the permanent magnets. To enhance the effect of regulation by rotation, the permanent magnets can be mounted asymmetrically relative to the axis of rotation.

Permanent magnets can be magnet assemblies, and in this case, the possibility to control the attraction force of the magnet assemblies to the ferromagnetic rail can be provided by the possibility of adding / removing magnets to / from the magnet assemblies or moving a portion of the magnets in the magnet assembly relative to the suspension and / or the remaining magnets in the magnet assembly or even a full replacement of the assembly of magnets.

From permanent magnets and magnetic circuits, more complex magnetic systems can be assembled. In this case, the possibility of controlling the attraction force of magnetic systems to the ferromagnetic rail can be ensured by the possibility of combining / separating / shunting / redirecting the magnetic fluxes of magnets that make up magnetic systems using magnetic circuits.

In a preferred particular embodiment, the magnetic suspension according to the invention comprises servo drives and / or hydraulic cylinders and / or gear drives and / or lever transmissions enabling adjustment of the attraction force of permanent magnets to the ferromagnetic rail by changing the position of the permanent magnets relative to the magnetic suspension / vehicle. To adjust the position of the magnets, several fixed positions of the permanent magnet unit relative to the vehicle / magnetic suspension can also be provided.

The problem of this invention is also solved by a magnetic suspension control system according to any one of the embodiments described above, which comprises a permanent magnet control unit and an electromagnet adjustment unit.

The permanent magnet control unit comprises: a permanent magnets loading determination module configured to determine the load and / or uncompensated load of the permanent magnets; and a permanent magnet adjustment module configured to control the attraction of the permanent magnets to the ferromagnetic rail by changing the position of the permanent magnets with respect to the suspension c ensuring that the permanent magnets carry a certain load and / or compensate for a certain uncompensated oh load permanent magnets.

The electromagnet control unit comprises: a fluctuation detection unit configured to determine the fluctuation of the gap between the electromagnet and the ferro rail, and an electromagnet adjustment module configured to control the current flowing through the electromagnet, thereby compensating for the gap fluctuations between the electromagnet and the ferro rail.

In one embodiment, the permanent magnets loading determination module is configured to determine the load of the permanent magnets based on the weight of the load, and in another embodiment, the permanent magnets load determination module is configured to determine the uncompensated load of the permanent magnets based on the magnitude and / or fluctuation of the gap between the electromagnet and ferro rail.

The fluctuation detection module may be configured to determine the fluctuation fluctuations between the electromagnet and the ferro rail based on the light reflecting gap measurement or on the basis of the measurement coil signal.

The object of this invention is also solved by a vehicle intended for traveling over an underpass with a ferromagnetic rail having a magnetic suspension according to any of the above-described embodiments and a magnetic suspension control system according to any of the above-described embodiments. Such a vehicle, in one embodiment, may have wheels that enable movement without magnetic levitation.

The configuration of permanent magnets can be adjusted before starting the movement under the weight of a particular car. Then the electromagnets are only needed to compensate for the motion fluctuations. Thanks to this, technical results such as reduced energy consumption, vehicle traffic safety, the possibility to balance the vehicle, and others are achieved.

### Brief description of the drawings

Fig. 1 shows a magnetic suspension scheme in one of the embodiments.
Fig. 2 is a schematic diagram of a magnetic suspension in another embodiment.
Fig. 3 shows a block diagram of a magnetic suspension control system.

### Detailed description

This invention relates to a vehicle intended for traveling over an underpass with a ferromagnetic rail. The ferromagnetic rail may have any shape, but in one of the preferred embodiments, it may be a flat beam horizontally disposed along the underpass. A rail made of a ferromagnetic material, such as steel, iron, cast iron or the like, provides a cost reduction due to the wide prevalence of iron and the low cost of production and the manufacture of products from it on a large scale, such as those required for manufacturing ferro rail for underpasses having the extent of hundreds and thousands of kilometers. Another advantage of using ferromagnetic materials is that the interaction of magnets with ferro rail can be carried out both in motion and without the movement of the vehicle along the ferro rail, for example, at stops.

The vehicle is preferably a train consisting of one or more traction cars (locomotives) and several cars without traction engines, but in one embodiment it may consist of a single car with a traction motor. To enhance performance, the vehicle has a magnetic suspension (suspension), described below, and a magnetic suspension control system, which is also described in detail below. In an advantageous embodiment, the vehicle has conventional wheels providing the possibility to move without magnetic levitation, for example at stations, during shunting operations or when adjusting the magnetic suspension.

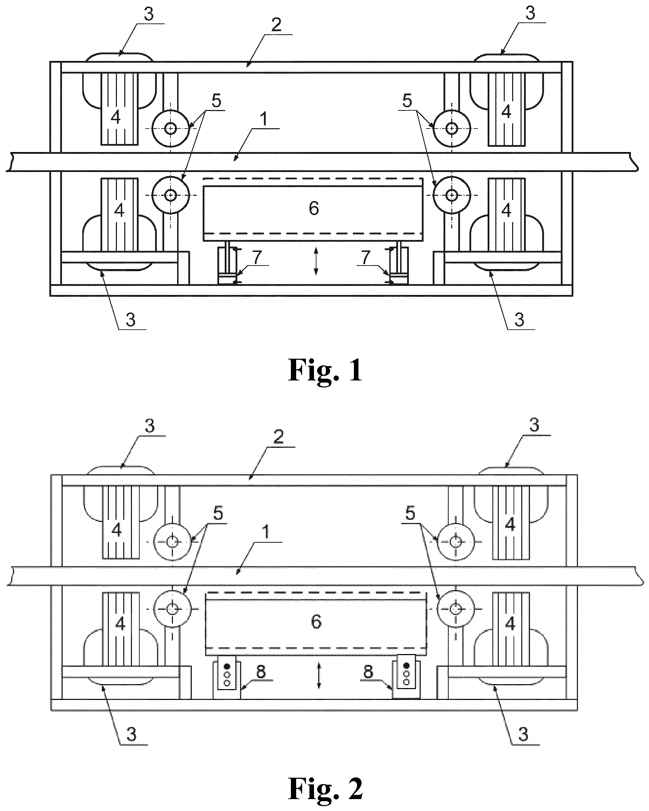

Fig. 1 and 2 are diagrams of the combined magnetic suspension of the car. The car moves along an underpass with a ferromagnetic rail 1. In the lower part of the car, in those places that are under the ferromagnetic rail when the car is in its normal position in the (on) underpass, i.e. when the ferromagnetic rail passes at the bottom of the car, permanent magnets 6 and electromagnets 3 are located. The permanent magnets 6 are mounted so that they are under the ferromagnetic rail 1, and the electromagnets 3 can be mounted at the bottom of the car so that they are above and / or under the ferromagnetic rail 1. The magnets can be turned directly to the ferromagnetic rail 1, as shown for the permanent magnet 6, or by means of magnetic circuits, as shown for electromagnets 3, whose magnetic field is directed to the ferro rail 1 by magnetic circuits 4.

The electromagnets 3 are mounted on the carriage frame 2 of the car, which preferably covers the ferro rail 1 on the side. The permanent magnet cartridge 6 is also mounted on the frame 2, but in fig. 1 and 2 it is shown that this is done by means of regulating devices 7 and 8, respectively. The device 7 includes hydraulic amplifiers that allow the magnets 6 to be adjusted in height relative to the suspension (vehicle), and the device 8 is a support with a fixed set of holes for manually mounting the magnets 6 in height relative to the suspension. In an advantageous variant, the suspension has wheels 5 which serve as stops for moving the car suspension up / down relative to the ferro rail 1. The upper wheels also serve for displacements without the use of magnetic levitation.

The minimum number of permanent magnets is such as to maintain some "calculated weight" of the car, for example, it can be the weight of an empty car or the average weight of a car during operation. If the weight of the car is equal to the calculated weight, the car is located above the underpass at the calculated clearance height of the car over the ferro rail at the expense of permanent magnets present in the magnetic suspension.

If the weight of the car is greater than the estimated value, the ponderomotive forces are not sufficient to provide magnetic levitation. In order for the car to rise above the underpass to the calculated height, include lower electromagnets 3 to create additional lift.

If the weight of the car is less than the calculated one, the car rises above the underpass above the estimated clearance height. Then the upper coils 3 are included to compensate for the excess lift. In an advantageous embodiment, all the magnets, both upper and lower, are rigidly interconnected, for example, by rigid attachment to the car frame. In this case, both the upper coils and the lower ones always cause an additional attraction to the ferro rail, but their location on opposite sides of the ferro rail causes changes in the clearance of different signs.

A similar algorithm is also used to compensate for the gap height fluctuations that are unavoidable during the movement of the train, for example, during bends, changes in the altitude of the ferro rail, effects on the car itself (for example, atmospheric precipitation, gusts of wind or movement of cargo or passengers). If the gap is reduced - increase the current in the upper coils 3 or decrease in the lower coils 3, and if increased, act in the opposite way. Wherein since the system is in a position of unstable equilibrium, the currents in the upper and lower magnets oscillate around zero values, as in the prototype, which ensures minimum power consumption. To ensure the optimum operation of the traction motor, it is necessary to withstand the gap with high accuracy, wherein the reaction time for changing the gap should be of the order of 10 ms. Provide such a reaction time by adjusting the permanent magnets is extremely difficult. Therefore, the stability of the traction motor (fixed clearance) is provided by the electromagnets.

The weight of the car varies when loading / unloading cargo or boarding / dropping passengers, for example, from 20 tons in an unloaded state to 50 tons in a loaded condition. In addition, depending on the type of cargo and its volume, as well as on the number of passengers, the loading of the car (in the loaded state) will vary from run to run. In this regard, to ensure magnetic levitation and safe mode, it is necessary to control the strength of the magnetic field provided by the magnetic suspension. Such an adjustment can be provided with the help of electromagnets, but in this embodiment the power consumption is increased, since the electromagnets must be supplied with a direct current throughout the entire path.

In the preferred embodiment provided by this invention, the lifting force of the magnetic suspension beforehand is pre-adjusted to the actual weight of the car by adjusting the permanent magnets. Then the electromagnets 3 are only needed to correct the fluctuations in the gap size during the movement of the train, and the power consumption and current consumption are significantly reduced. It is possible to adjust the permanent magnets by changing the amount and / or position (preferably with respect to the suspension) and / or the configuration of the permanent magnets 6.

In one embodiment, the adjustment of the lifting force of the magnetic suspension can be effected by adjusting the position of the permanent magnets 6 relative to the suspension / vehicle, for example up / down, thereby adjusting their height position relative to the ferro rail 1, since the position of the vehicle / magnetic suspension relative to the ferro rail is ensured by a constant. This embodiment is shown in fig. 1 and 2. Since the adjustment of the position of the permanent magnets takes place inside (relatively) the suspension, this adjustment, unlike the prototype, does not change the gap between the suspension (vehicle) and the ferro rail (underpass).

In another embodiment, the possibility to control the attraction force of permanent magnets to the ferromagnetic rail is provided by the possibility to rotate the permanent magnets with respect to the magnetic suspension, and hence with respect to the ferromagnetic rail. Magnets must be rotated such that a change in the direction of the magnetization vector with respect to the suspension (ferromagnetic rail) occurs, since in this case the force of attraction of the magnet to the ferro rail will vary slightly.

To enhance the effect of magnet rotation, they can be mounted asymmetrically relative to the axis of rotation (or the rotation axis is provided away from the center of mass of the rotated magnet, magnetic assembly or system). In this case, when the magnet is rotated, in addition to its rotation, it will move relative to the suspension, including up / down, and hence the approach or removal to the ferromagnetic rail. In this embodiment, the direction of the magnetization vector or its variation may not matter.

Convenience of the use of regulation with rotation is that for its implementation, for example, stepper motors, gears, and other devices that form and convert rotational movements and which can be compact and compactly arranged can be used. In addition, when the magnets are located in axially rotated cylinders or other rotation bodies, the gaps between rotating elements and housings in general or gaps varying in size can be eliminated in the control devices, which will increase the reliability and life of these devices, and hence the reliability and safety trains in general, due to the elimination of the possibility of clogging or filling these gaps with harmful, polluting or blocking substances or objects, as well as preventing the entry into such gaps of live animals creatures.

In addition, the permanent magnets may be magnet assemblies, and then the possibility to control the attraction force of the magnet assemblies to the ferromagnetic rail is provided by the possibility of adding / removing magnets to / from the magnet assemblies or replacing the assemblies as a whole. In addition, the adjustment of the attraction force of the magnet assemblies to the ferromagnetic rail can also be provided by moving a portion of the magnets in the magnet assembly relative to the suspension and / or the remaining magnets in the magnet assembly. This can simplify the method of regulation and the cost of control devices due to the standardization of the magnets necessary for this and their assemblies.

In yet another embodiment, the permanent magnets and magnetic cores are assembled into more complex magnetic systems, and the possibility to control the attraction of magnetic systems to the ferromagnetic rail is then provided by the possibility of combining / separating / shunting / redirecting the magnetic fluxes of magnets that make up magnetic systems using magnetic circuits. In this case, it is possible to obtain distributed magnetic systems, which can be located not in a concentrated manner, but in a larger space, which simplifies the design and manufacture of such systems and the train as a whole. In addition, the use of such magnetic systems gives more possibilities, accuracy and flexibility in automation of regulation.

In order to control the force of attraction of the permanent magnets to the ferromagnetic rail, the magnetic suspension may comprise servo drives and / or hydraulic cylinders and / or gear drives and / or linkages that provide the possibility to provide and automate the remote positioning of permanent magnets relative to the suspension, however in some embodiments this change in the position of permanent magnets can be done manually, which makes the system easier and cheaper.

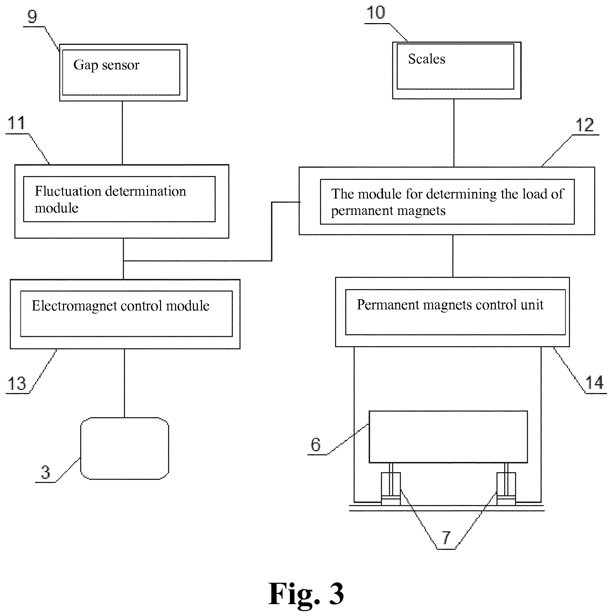

In order to control the magnetic suspension, during the preparation for the trip and in motion in the car, a magnetic suspension control system is preferably provided, one possible embodiment of which is shown in fig. 3. Such a control system may comprise a permanent magnet adjustment unit and an electromagnet control unit.

The permanent magnet adjustment unit in the preferred embodiment comprises:
- a permanent magnets loading determination unit 12 configured to determine the load and / or uncompensated portion of the load of the permanent magnets, and
- a permanent magnet adjustment unit 14 configured to control the attraction force of the permanent magnets 6 to the ferromagnetic rail by changing the position of the permanent magnets relative to the suspension, in particular by controlling the adjusting means, for example, the hydraulic cylinders 7, allowing the permanent magnets to raise a certain load and / or compensation for a certain uncompensated part of the load.

The electromagnetically controlled regulating unit preferably comprises:
- a fluctuation determination unit 11 configured to determine gap fluctuations between the electromagnet and the ferro rail, and
- an electromagnet adjustment module 13 configured to regulate the current flowing through the electromagnet 3, thereby compensating for fluctuations in the gap between the electromagnet and the ferro rail.

The permanent magnet load determination module 12 can determine the loads (magnitudes of the load) of permanent magnets based on the scales 10 showing the weight of the car (the load being carried), which can also be set, for example, by calculation or by tables that can be determined by calculations or in an experimental way.

In one embodiment, the permanent magnet load determination module 12 can determine the uncompensated load of the permanent magnets based on the magnitude and / or fluctuation of the gap between the electromagnet and the ferro rail. In this embodiment, in the permanent magnet load determination module 12, a signal from the fluctuation determining unit 11 (as shown in fig. 3) or the electromagnet control module 13 from which the constant component is extracted (or the constant component can be fed directly from the modules) and constant magnets are regulated based on this constant component, since this constant component reflects a load uncompensated by the permanent magnets, which can be compensated adjustment of permanent magnets. This allows to abandon the use of scales, which, taking into account the weight of the car can be very complex and cumbersome, and carry out weight compensation in an adaptive way. For example, the fluctuation detection unit 11 or the permanent magnet load detecting unit 12 itself, from the gap sensor 9, with the gradually increasing attraction force of the permanent magnets 6 to the ferro rail, provided by the appropriate control of the actuators controlling the position of the permanent magnets, can determine the moment of separation of the car from the ferro rail or underpass and the beginning of levitation and / or reaching a predetermined position in the levitating state.

The fluctuation detection unit 11 can detect fluctuations in the gap between the electromagnet and the ferro rail based on the reflective measurement of the gap size based on the signal from the measuring coil (which also captures the magnetic field induced in the ferro rail of the magnetic suspension) or by other gap sensors 9.

Shown in the flowchart on fig. 3 connections are given only for an example, other configurations are possible. Modules / blocks can be combined, replaced or separated into other elements. They can be performed in hardware, software or hardware-software manner. Data processing can be analog or digital, all necessary types of signal transformation can be carried out by type, size, shape, sign and other parameters. The control system can be made of individual components, chips or programmable devices, including computers, controllers, etc.

The use of permanent magnets on the principle of attraction to ferro rail leads to unstable systems. Indeed, deviations from the equilibrium position (increase or decrease of the gap) will lead to the fact that the car either drops onto the underpass or is fixed on the ferro rail. However, if you install the electromagnets in addition to the permanent magnets, then it becomes possible to adjust the gap quickly. Wherein, as calculations show, the current consumed by the coils significantly decreases.

The proposed system works as follows. There is an underpass along which the train moves. The underpass includes a special ferromagnetic rail. With each car there are permanent magnets, which are attracted to at least one ferromagnetic rail. The force of attraction of permanent magnets is such as to ensure the levitation of the car. In addition to permanent magnets, there are electromagnetic coils fixed above and below the ferro rail to compensate for the gap fluctuations with respect to the ferromagnetic rail (the gap can be counted from any element having a constant position relative to the car). The traction motor of the train accelerates it to a predetermined speed, overcoming only the air resistance and the force of electrodynamic braking, which in this case has a small value.

In the case where the adjustment of the attraction force of the permanent magnets, for example their position or orientation, is controlled by, for example, the above mechanisms or devices that can be controlled by signals from the control system, adjustment of the attraction force of the permanent magnets can be carried out adaptively. For example, in the case when the train enters a turn (long or short), a centrifugal force appears, which will tilt the cars and, accordingly, the load on one side will be greater than the other. This change in the load balance can be worked out (compensated) with the help of electromagnets, but in the case of prolonged turns this can lead to additional energy expenditure on the electromagnets feeding, while the permanent magnet adjustment module could change the attraction forces of permanent magnets from different sides of the train and, thus, to ensure the balancing of the car in the transverse motion of the train (in the case of movement with altitude differences, the balance in the longitudinal direction can also be adjusted).

Such regulation can be performed automatically. In the event that from the regulating current of the electromagnets (or the signal controlling the regulating current or the sensor reading) to extract a constant component (for a certain period of time, which can be correlated, for example, with the reaction time of the permanent magnets regulating devices), this constant component can be compensated by adjusting the force of attraction of permanent magnets, wherein this can be regulated in this way either by increasing the load or by decreasing it.

Thus, when entering the turn on one side of the car, the electromagnets begin to have a constant component. As a result of determining this component, the force of attraction of the permanent magnets varies and as a result, the electromagnets no longer need to compensate for such a long-term load change and current consumption is reduced.

Since trains move along permanent and well-known routes, the regulation of permanent magnets, their attractive forces, can be carried out according to predetermined load distributions along the route, which can be obtained during calibration trips with different speeds. Then, based on the speed and / or location, which can be detected by sensors, for example, GLONASS / GPS located in each car (wherein the autonomy and reservation of the sensors are ensured, which increases the reliability and safety of the control system and suspension in general) and / or in one of the wagons and / or locomotive (in this case the cost of the regulation system is reduced and the development and fabrication is simplified), the current one can be determined or the subsequent one can be determined any period of time (which may be associated with a regulating device response time), load and, therefore, adjusted the force of attraction of the permanent magnets to the ferromagnetic rail.

The regulation of electromagnets can also be carried out on the basis of the readings of the position / velocity sensors and calibration measurements, however, the electromagnets are preferably controlled in an automatic mode that provides a response to actual fluctuations, rather than measured earlier, because the ferromagnetic rail (and underpass) as a result of external and internal factors can unpredictably change its location, geometry, etc. (for example, as a result of heating or cooling under the influence of ambient temperature, under the influence of wind or hurricanes, under the repeated impact of passing trains, as a result of aging processes, due to accidental incidents or deliberate acts of vandals, etc.), and therefore ensuring the safety and reliability of trains on magnetic suspension, preferably tracking the actual situation.

Based on these data (based on sensor signals and / or electromagnetic regulation modules), monitoring data on the state of the ferromagnetic rail and underpass can be collected, transmitted, copied and processed (this can for example be done by a control system or other devices or modules), which will allow to predict and / or warn personnel (for example, controllers, drivers) and / or road or train control systems about the happened and / or expected changes in ferromagnetic rail and underpass that will allow to react accordingly and carry out planned and / or preventive repairs. This will additionally increase the safety, reliability and lifetime of the underpass, ferro rail, magnetic suspension, cars and locomotives.

The embodiments described herein are for illustrative purposes only and may be varied, supplemented or eliminated in any manner within the scope of protection defined by the claims. All features can be combined in any combination and sequence, applied together or separately in such a way as to provide the solution of the object of this invention and the achievement of the technical result, and also to obtain advantages relating to particular features that may also be considered as corresponding to additional technical results.

## Claims

1. A magnetic suspension of a vehicle for an underpass with a ferromagnetic rail, comprising permanent magnets and electromagnets arranged to be able to attract to the ferromagnetic rail, the permanent magnets being arranged to control the attraction force to the ferromagnetic rail by changing the position of the permanent magnets with respect to the suspension.

2. Suspension according to claim 1, **characterized in that** the permanent magnets are arranged to be positioned beneath the ferromagnetic rail, and the electromagnets are arranged to be positioned above and / or beneath the ferromagnetic rail when the vehicle is in the underpass.

3. Suspension according to claim 1, **characterized in that** the possibility of adjusting the attraction force of permanent magnets to the ferromagnetic rail is provided by the possibility of moving the permanent magnets up and / or downward with respect to the suspension.

4. Suspension according to claim 1, **characterized in that** the possibility of adjusting the attraction force of permanent magnets to the ferromagnetic rail is provided by the possibility of rotating permanent magnets with respect to the suspension.

5. Suspension according to claim 4, **characterized in that** the permanent magnets are arranged asymmetrically relative to the axis of rotation.

6. Suspension according to claim 1, **characterized in that** the permanent magnets are assemblies of magnets and the possibility to control the attraction force of the magnet assemblies to the ferromagnetic rail is provided by the possibility of adding / removing magnets to / from the magnet assemblies or by replacing the entire assembly or by moving a part of the magnets in the magnet assembly relative to the suspension and / magnets in the assembly of magnets.

7. Suspension according to claim 1, **characterized in that** the permanent magnets are magnetic systems consisting of several magnets and magnetic circuits, wherein the possibility of controlling the attraction force of magnetic systems to the ferromagnetic rail is provided by the possibility of combining / separating / shunting / redirecting the magnetic fluxes of the magnets included in the magnetic systems with using magnetic cores.

8. Suspension according to claim 1, **characterized in that** it comprises servos and / or hydraulic cylinders and / or gear drives and / or lever transmissions enabling the position of permanent magnets to be changed relative to the suspension, and / or several fixed positions of permanent magnets relative to the suspension.

9. A magnetic suspension of a vehicle for an underpass with a ferromagnetic rail comprising permanent magnets and electromagnets arranged to be able to be attracted to the ferromagnetic rail, wherein the permanent magnets being arranged to control the attractive force to the ferromagnetic rail, wherein the possibility of controlling the attraction force of the permanent magnets to the ferromagnetic rail is provided by the possibility rotation of the permanent magnets with respect to the ferromagnetic rail and / or servo drives and / or hydraulic cylinders and / or a reduction gear and / or the linkage and / or a number of fixed positions of the permanent magnets relative to the vehicle.

10. The magnetic suspension control system according to any one of the claims 1-9, comprising: a permanent magnet adjustment unit; and an electromagnet control unit,
wherein the permanent magnets control unit comprises:
a permanent magnets loading determination module configured to determine the load and / or uncompensated load of the permanent magnets, and
a permanent magnet adjustment module configured to control the attraction force of the permanent magnets to the ferromagnetic rail by changing the position of the permanent magnets with respect to the suspension, ensuring that the permanent magnets carry a certain load and / or compensating for a certain uncompensated load of the permanent magnets,
wherein the electromagnet control unit comprises:
a fluctuation determination unit configured to determine gap fluctuations between the electromagnet and the ferro rail, and
an electromagnet adjustment module configured to regulate the current flowing through the electromagnet, thereby compensating for fluctuations in the gap between the electromagnet and the ferro rail.

11. The system according to claim 10, **characterized in that** the permanent magnets loading determination module is configured to determine the load of permanent magnets based on load weight readings.

12. The system according to claim 10, **characterized in that** the permanent magnets loading determination module is configured to determine the uncompensated load of the permanent magnets based on the magnitude and / or fluctuation of the gap between the electromagnet and the ferro rail.

13. The system according to claim 10, **characterized in that** the fluctuation detection module is configured to determine the fluctuations of the gap between the electromagnet and the ferro rail on the basis of a light reflective gap measurement.

14. The system according to claim 10, **characterized in that** the fluctuation detection module is configured to determine the fluctuations of the gap between the electromagnet and the ferro rail based on the signal of the measuring coil.

15. A vehicle intended for traveling over an underpass with a ferromagnetic rail, having a magnetic suspension according to any one of claims 1 to 9 and a magnetic suspension control system according to any one of claims 10-14.

16. The vehicle according to claim 15, **characterized in that** it has wheels that enable the movement without magnetic levitation.
